Europäisches Patentamt

European Patent Office

Office européen des brevets

(19)

(11) **EP 1 634 760 A1**

(12) **EUROPÄISCHE PATENTANMELDUNG**

(43) Veröffentlichungstag:
**15.03.2006 Patentblatt 2006/11**

(51) Int Cl.:
***B60K 28/14*** *(2006.01)* ***B60T 8/1755*** *(2006.01)*

(21) Anmeldenummer: **05018746.7**

(22) Anmeldetag: **30.08.2005**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **03.09.2004 DE 102004042705**

(71) Anmelder: **DaimlerChrysler AG**
**70567 Stuttgart (DE)**

(72) Erfinder:
• **Baumann, Peter**
 **76571 Gaggenau (DE)**
• **Fischer, Jörg**
 **70619 Stuttgart (DE)**
• **Mai, Markus**
 **76456 Kuppenheim (DE)**

(54) **System und Verfahren zur Stabilisierung eines Fahrzeugs**

(57) Die Erfindung bezieht sich auf eine Vorrichtung und ein Verfahren zur Stabilisierung eines Fahrzeugs, mit einer Erfassungseinrichtung (10), die zur Ermittlung einer einen Reifendruck repräsentierenden Reifendruckgröße vorgesehen ist, mit einer Stabilisierungseinrichtung (11), die bei Erfüllung eines vorgegebenen Auslösekriteriums fahrzeugstabilisierende Eingriffe in zur Beeinflussung der Längs- und/oder Querdynamik des Fahrzeugs vorgesehene Fahrzeugaggregate (12) vornimmt, und mit einer Auswerteeinheit (13), die das vorgegebene Auslösekriterium in Abhängigkeit der erfassten Reifendruckgröße im Sinne einer Optimierung des Stabilitätsverhaltens des Fahrzeugs anpasst. Erfindungsgemäß ermittelt die Auswerteeinheit (13) eine Reifendruckänderungsgröße, die ein zeitliches Verhalten der erfassten Reifendruckgröße beschreibt, wobei die Anpassung des Auslösekriteriums unter Berücksichtigung der ermittelten Reifendruckänderungsgröße erfolgt.

Fig. 1

EP 1 634 760 A1

**Beschreibung**

Die Erfindung bezieht sich auf eine Vorrichtung und ein Verfahren zur Stabilisierung eines Fahrzeugs, mit einer Erfassungseinrichtung, die zur Ermittlung einer einen Reifendruck repräsentierenden Reifendruckgröße vorgesehen ist, mit einer Stabilisierungseinrichtung, die bei Erfüllung eines vorgegebenen Auslösekriteriums fahrzeugstabilisierende Eingriffe in zur Beeinflussung der Längs- und/oder Querdynamik des Fahrzeugs vorgesehene Fahrzeugaggregate vornimmt, und mit einer Auswerteeinheit, die das vorgegebene Auslösekriterium in Abhängigkeit der ermittelten Reifendruckgröße im Sinne einer Optimierung des Stabilitätsverhaltens des Fahrzeugs anpasst.

Ein derartiges Verfahren zur Stabilisierung eines instabilen Fahrzustands eines Fahrzeugs geht aus der Druckschrift DE 102 30 967 A1 hervor. Beim bekannten Verfahren wird ein Reifenfülldruck ermittelt, in dessen Abhängigkeit eine die Querdynamik des Fahrzeugs beeinflussende Querdynamikgröße im Sinne einer Optimierung des Stabilitätsverhaltens des Fahrzeugs angepasst wird. Die der Querdynamikgröße entsprechende Beeinflussung der Querdynamik des Fahrzeugs erfolgt mittels einer im Fahrzeug angeordneten Fahrdynamikregelung, die bei Erfüllung eines durch die Querdynamikgröße bestimmten Auslösekriteriums fahrzeugstabilisierende Eingriffe in Radbremseinrichtungen und/oder den Antrieb des Fahrzeugs vornimmt.

Nachteilig ist, dass der ermittelte Reifenfülldruck für sich genommen keine unmittelbare Aussage in Hinblick auf die Charakteristik eines an einem Fahrzeugreifen auftretenden Reifendruckverlusts erlaubt. So lässt sich nicht ohne weiteres unterscheiden, ob der Reifendruckverlust rasch, beispielsweise aufgrund einer erheblichen Beschädigung des Fahrzeugreifens, oder aber schleichend erfolgt. Es besteht daher die Möglichkeit, dass es zu einer Fehlanpassung der Querdynamikgröße und damit zu einer der jeweiligen Charakteristik des Reifendruckverlusts unangemessenen, insbesondere verspäteten Durchführung der fahrzeugstabilisierenden Eingriffe kommt.

Aufgabe der vorliegenden Erfindung ist es daher, eine Vorrichtung bzw. ein Verfahren der eingangs genannten Art derart weiterzubilden, dass eine Fehlanpassung des Auslösekriteriums in Hinblick auf die jeweilige Charakteristik eines auftretenden Reifendruckverlusts vermieden wird.

Diese Aufgabe wird durch eine Vorrichtung bzw. ein Verfahren gemäß den Merkmalen des Patentanspruchs 1 bzw. des Patentanspruchs 14 gelöst.

Die Vorrichtung zur Stabilisierung eines Fahrzeugs weist neben einer Erfassungseinrichtung, die zur Ermittlung einer einen Reifendruck repräsentierenden Reifendruckgröße vorgesehen ist, weiterhin eine Stabilisierungseinrichtung auf, die bei Erfüllung eines vorgegebenen Auslösekriteriums fahrzeugstabilisierende Eingriffe in zur Beeinflussung der Längs- und/oder Querdynamik des Fahrzeugs vorgesehene Fahrzeugaggregate vornimmt. Des weiteren ist eine Auswerteeinheit vorhanden, die das vorgegebene Auslösekriterium in Abhängigkeit der ermittelten Reifendruckgröße im Sinne einer Optimierung des Stabilitätsverhaltens des Fahrzeugs anpasst. Erfindungsgemäß ermittelt die Auswerteeinheit eine Reifendruckänderungsgröße, die ein zeitliches Verhalten der ermittelten Reifendruckgröße beschreibt, wobei die Anpassung des Auslösekriteriums unter Berücksichtigung der ermittelten Reifendruckänderungsgröße erfolgt. Da die Reifendruckänderungsgröße letztlich das zeitliche Verhalten des Reifendrucks wiedergibt, erlaubt diese eine unmittelbare Aussage in Hinblick auf die Charakteristik eines an einem Fahrzeugreifen auftretenden Reifendruckverlusts, sodass sich eine Fehlanpassung der Querdynamikgröße und damit eine der jeweiligen Charakteristik des Reifendruckverlusts unangemessene, insbesondere verspätete Durchführung der fahrzeugstabilisierenden Eingriffe zuverlässig vermeiden lässt.

Die Reifendruckänderungsgröße ergibt sich beispielsweise durch zeitliche Ableitung der ermittelten Reifendruckgröße, wobei in der Regel zeitliche Ableitungen bis einschließlich der 2. Ordnung zur genauen Beschreibung des zeitlichen Verhaltens des Reifendrucks und damit der Charakteristik eines auftretenden Reifendruckverlusts ausreichend sind.

Vorteilhafte Ausführungen der erfindungsgemäßen Vorrichtung gehen aus den Unteransprüchen hervor.

Vorteilhafterweise erfolgt die Anpassung des Auslösekriteriums unter gleichzeitiger Berücksichtung sowohl der ermittelten Reifendruckänderungsgröße als auch der ermittelten Reifendruckgröße selbst, sodass neben dem zeitlichen Verhalten des Reifendrucks ebenfalls dessen momentaner Zustand bei der Anpassung des Auslösekriteriums berücksichtigt werden kann.

Die Reifendruckgröße kann entweder unmittelbar durch explizite Erfassung des Reifendrucks oder aber auf Basis implizit druckabhängiger Größen, wie beispielsweise einer erfassten Reifentemperatur oder einer erfassten Raddrehzahl ermittelt werden, wobei der Umstand genutzt wird, dass die innere Reibung des Fahrzeugreifens und damit die Reifentemperatur mit abnehmenden Reifendruck zunimmt, bzw. dass der Reifendurchmesser mit abnehmenden Reifendruck abnimmt und somit die Raddrehzahl in entsprechendem Maß zunimmt. Die Reifendruckgröße kann hierbei eine Funktion einer einzelnen oder aber einer beliebigen Kombination der vorstehend genannten Größen sein, wobei sich durch redundante Berücksichtigung mehrerer Größen eine besonders zuverlässige Ermittlung der Reifendruckgröße erzielen lässt. Insbesondere kann die ermittelte Reifendruckgröße auch einfach mit dem erfassten Reifendruck und/oder mit der erfassten Reifentemperatur und/oder der erfassten Raddrehzahl identisch sein. Die Erfassung des Reifendrucks erfolgt vorzugsweise durch Messung des im Innenraum des Fahrzeugreifens vorliegenden Luftdrucks. Entsprechendes gilt für die Erfassung der Reifentemperatur, die entweder durch Messung der im Innenraum des Fahrzeugreifens vorliegenden Lufttemperatur oder aber unmittelbar durch Messung der Temperatur des Fahrzeugreifens selbst erfolgt. Die für die Anpassung des Auslösekriteriums relevante Reifentemperatur ergibt sich dabei aus der Differenz zwischen der erfassten Reifentemperatur und der zum jeweiligen Erfassungszeitpunkt vorliegenden Umgebungstemperatur.

Vorteilhafterweise erfolgt die Anpassung des Auslösekriteriums dann, wenn die Auswerteeinheit feststellt, dass die ermittelte Reifendruckgröße und/oder die ermittelte Reifendruckänderungsgröße ein vorgegebenes Modifikationskriterium erfüllt, wobei die Erfüllung des Modifikationskriteriums das Vorliegen eines kritischen Reifendruckverlusts angibt. Ein kritischer Reifendruckverlust liegt beispielsweise dann vor, wenn sich durch Auswertung der Reifendruckgröße und/oder der Reifendruckänderungsgröße ergibt, dass der Fahrzeugreifen einen Reifendruck aufweist, dessen momentaner Zustand bzw. dessen zeitliches Verhalten charakteristisch für das Auftreten eines Reifendefekts ist. Durch entsprechende Vorgabe des Modifikationskriteriums lässt sich insbesondere verhindern, dass vorübergehende Änderungen des Reifendrucks, wie sie typischerweise während der Fahrt des Fahrzeugs aufgrund von Bodenunebenheiten und dergleichen auftreten, zu einer unerwünschten Beeinflussung des Auslösekriteriums führen. Das Modifikationskriterium basiert beispielsweise auf einem geeigneten Bewertungsmodell, das sich aufgrund von Fahrversuchen oder Simulationen gewinnen lässt.

Des weiteren ist es denkbar, dass eine der Anpassung des Auslösekriteriums vorangehende Voranpassung erfolgt, wenn die Auswerteeinheit feststellt, dass die erfasste Reifendruckgröße ein vorgegebenes Voranpassungskriterium erfüllt, wobei die Erfüllung des Voranpassungskriteriums das Vorliegen eines kritischen Reifendruckzustands angibt. Ein kritischer Reifendruckzustand liegt beispielsweise dann vor, wenn sich durch Auswertung der Reifendruckgröße ergibt, dass der Fahrzeugreifen einen momentanen Reifendruck aufweist, der den vorgeschriebenen Reifendruck um ein gefährliches Maß unterschreitet. Die Überprüfung des Voranpassungskriteriums erfolgt vorzugsweise vor Fahrtbeginn des Fahrzeugs, sodass sich ein vor Antritt der Fahrt bereits bestehender Reifendefekt bzw. ein von vornherein zu niedriger Reifendruck, beispielsweise aufgrund eines unzureichend aufgepumpten Fahrzeugreifens, frühzeitig erkennen lässt und eine angemessene, insbesondere rechtzeitige Durchführung gegebenenfalls notwendig werdender fahrzeugstabilisierender Eingriffe möglich ist.

Da sich bei niedrigem Reifendruck im Falle einer Kurvenfahrt zum einen der Grad der Kurvenkrümmung und zum anderen die Lokalisation des betroffenen Fahrzeugreifens am Fahrzeug je nach Richtung der Kurvenkrümmung unterschiedlich auf das Fahrverhalten und damit auf das Stabilitätsverhalten des Fahrzeugs auswirkt, ist es von Vorteil, wenn in Zusammenhang mit einer Kurvenfahrt im Falle eines Reifendruckverlusts bzw. eines von vornherein zu niedrigen Reifendrucks bei der Anpassung des Auslösekriteriums sowohl der Grad der Kurvenkrümmung als auch die Lokalisation des betroffenen Fahrzeugreifens relativ zur Richtung der Kurvenkrümmung berücksichtigt wird.

Ein Maß für den Grad bzw. die Richtung der Kurvenkrümmung der durchfahrenen Kurve ist die momentane Gierbewegung des Fahrzeugs, d.h. die Drehbewegung des Fahrzeugs um dessen Hochachse. So kann der Grad bzw. die Richtung der Kurvenkrümmung beispielsweise auf Basis von infolge der Kurvenfahrt an den Fahrzeugrädern verursachten Raddrehzahldifferenzen ermittelt werden. Alternativ lässt sich der Grad bzw. die Richtung der Kurvenkrümmung zuverlässig auf Basis einer Radlenkwinkelgröße, die einen an lenkbaren Fahrzeugrädern eingestellten Radlenkwinkel beschreibt, und/oder einer Lenkradwinkelgröße, die einen an einem Lenkrad eingestellten Lenkradwinkel beschreibt, und/oder einer Gierwinkelgröße, die den Gierwinkel des Fahrzeugs beschreibt, und/oder einer Querbeschleunigungsgröße, die die Querbeschleunigung des Fahrzeugs beschreibt, durchführen. Da das Lenkrad letztlich zur Vorgabe des Radlenkwinkels vorgesehen ist, besteht zwischen dem Lenkradwinkel und dem Radlenkwinkel im allgemeinen ein eindeutiger Zusammenhang, sodass es in aller Regel ausreicht, wenn die Auswerteeinheit entweder die Lenkradwinkelgröße oder aber die Radlenkwinkelgröße zur Ermittlung der Gierbewegung des Fahrzeugs heranzieht.

Bei der Stabilisierungseinrichtung kann es sich insbesondere um ein Elektronisches Stabilitäts-Programm (ESP), also um ein System zur Stabilisierung der Querdynamik des Fahrzeugs, insbesondere um ein System zur Regelung der Gierrate des Fahrzeugs, mit dem die Drehbewegung des Fahrzeugs um seine Hochachse beeinflusst bzw. stabilisiert wird, ein Antiblockiersystem (ABS) oder eine Antriebsschlupfregelung (ASR) handeln. Da derartige Stabilisierungseinrichtungen in der Regel im Fahrzeug vorhanden sind, wird eine kostengünstige Umsetzung der erfindungsgemäßen Vorrichtung bzw. des erfindungsgemäßen Verfahrens ermöglicht.

Vorteilhafterweise ist das Auslösekriterium durch eine die Auslöseempfindlichkeit der Stabilisierungseinrichtung bestimmende Auslöseschwelle definiert, sodass die Anpassung des Auslösekriteriums durch einfache Anpassung der Auslöseschwelle erfolgen kann. Hierbei ist im allgemeinen die Auslöseempfindlichkeit der Stabilisierungseinrichtung umso höher je kleiner der Wert der Auslöseschwelle gewählt wird.

Alternativ kann das Auslösekriterium auch durch die Auslöseschwelle selbst gebildet sein. In beiden Fällen wird durch entsprechende Anpassung der Auslöseschwelle eine umso höhere Auslöseempfindlichkeit gewählt, je niedriger der momentane Wert des Reifendrucks bzw. je größer dessen zeitliche Abnahme ist. Entsprechendes gilt im Falle der Reifentemperatur und/oder der Raddrehzahl, wobei eine umso höhere Auslöseempfindlichkeit gewählt wird, je höher der momentane Wert bzw. die zeitliche Zunahme der Reifentemperatur und/oder der Raddrehzahl ist.

Da das Stabilitätsverhalten des Fahrzeugs im Falle einer Kurvenfahrt aufgrund der dabei auftretenden Kurvenkräfte kritischer ist als im Falle einer Geradeausfahrt, erfolgt die Anpassung der Auslöseschwelle darüber hinaus derart, dass im Falle einer Kurvenfahrt eine entsprechend höhere Auslöseempfindlichkeit gewählt wird als im Falle einer Geradeausfahrt, wobei im Falle einer Kurvenfahrt eine umso höhere Auslöseempfindlichkeit gewählt wird, je größer der ermittelte Grad der Kurvenkrümmung ist. Zusätzlich wird die Lokalisation des vom Reifendruckverlust betroffenen Fahrzeugreifens am Fahrzeug relativ zur Richtung der Kurvenkrümmung berücksichtigt. So wird beispielsweise eine höhere Auslöseempfindlichkeit gewählt, wenn sich der betroffene Fahrzeugreifen auf der kurvenäußeren Seite des Fahrzeugs befindet als wenn sich dieser auf der kurveninneren Seite des Fahrzeugs befindet.

Die Anpassung der Auslöseschwelle kann einem ersten Schwellenwert oder einem zweiten Schwellenwert entsprechend abgestuft erfolgen, wobei der erste Schwellenwert einer geringeren Auslöseempfindlichkeit entspricht als der zweite Schwellenwert. Die beschriebene Abstufung ermöglicht eine besonders einfache und damit robuste und mit geringem Rechenaufwand verbundene Anpassung der Auslöseschwelle. Es ist allerdings auch vorstellbar, eine feinere oder sogar kontinuierliche Abstufung vorzusehen.

Die erfindungsgemäße Vorrichtung bzw. das erfindungsgemäße Verfahren wird im folgenden anhand der beigefügten Zeichnungen näher erläutert. Dabei zeigen:

Fig. 1   ein schematisch dargestelltes Ausführungsbeispiel der erfindungsgemäßen Vorrichtung, und

Fig. 2   ein Ausführungsbeispiel des erfindungsgemäßen Verfahrens in Form eines Flussdiagramms.

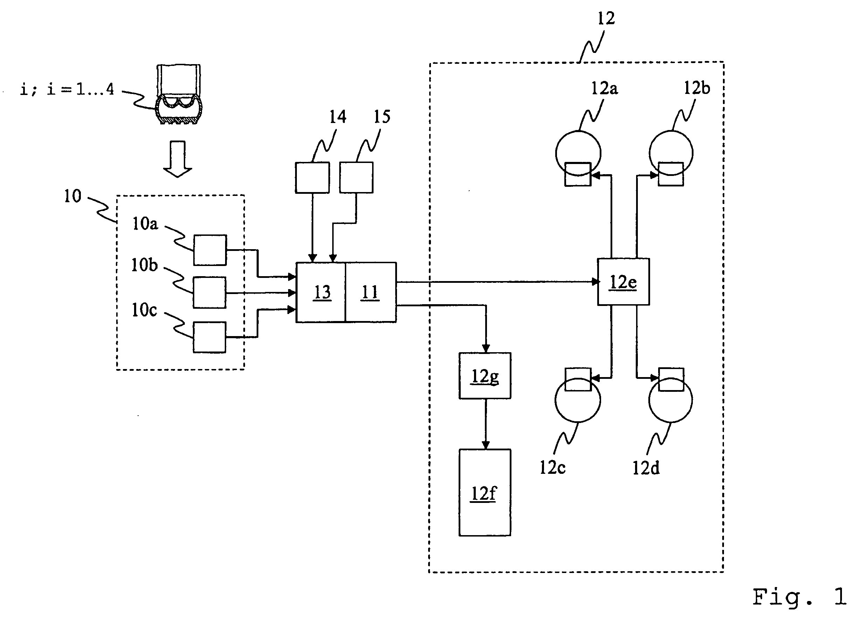

Fig. 1 zeigt ein schematisch dargestelltes Ausführungsbeispiel der erfindungsgemäßen Vorrichtung zur Stabilisierung eines Fahrzeugs.

Die Vorrichtung weist neben einer Erfassungseinrichtung 10, die zur Ermittlung einer einen Reifendruck repräsentierenden Reifendruckgröße vorgesehen ist, eine Stabilisierungseinrichtung 11 auf, die bei Erfüllung eines vorgegebenen Auslösekriteriums fahrzeugstabilisierende Eingriffe in zur Beeinflussung der Längs- und/oder Querdynamik des Fahrzeugs vorgesehene Fahrzeugaggregate 12 vornimmt, wobei es sich bei letzteren um Radbremseinrichtungen 12a bis 12d und/oder einen Antrieb 12f des Fahrzeugs handelt. Des weiteren ist eine Auswerteeinheit 13 vorhanden, die das vorgegebene Auslösekriterium in Abhängigkeit der ermittelten Reifendruckgröße im Sinne einer Optimierung des Stabilitätsverhaltens des Fahrzeugs anpasst. Hierzu ermittelt die Auswerteeinheit 13 eine Reifendruckänderungsgröße, die ein zeitliches Verhalten der ermittelten Reifendruckgröße beschreibt, wobei die Anpassung des Auslösekriteriums unter Berücksichtigung der ermittelten Reifendruckänderungsgröße erfolgt.

In der Regel ist jedem der Fahrzeugreifen i des Fahrzeugs eine eigene Erfassungseinrichtung 10 zugeordnet, wobei ohne Einschränkung der Allgemeinheit vorausgesetzt werden soll, dass es sich um ein vierrädriges Fahrzeug handelt, sodass also i=1...4 gilt. Da die Ermittlung und anschließende Weiterverarbeitung der Reifendruckgröße bzw. der Reifendruckänderungsgröße für jeden der Fahrzeugreifen i=1...4 in gleicher Weise erfolgt, genügt es, sich im folgenden auf einen einzelnen Fahrzeugreifen i∈{1...4} zu beziehen.

Wie bereits erwähnt, soll die dem Ausführungsbeispiel zugrunde liegende Betrachtung eines vierrädrigen Fahrzeugs keine einschränkende Wirkung haben. Die erfindungsgemäße Vorrichtung bzw. das erfindungsgemäße Verfahren kann auch bei einem Fahrzeug mit sechs, acht oder mehr Fahrzeugrädern zum Einsatz kommen. Auch wird die Anwendbarkeit der erfindungsgemäßen Vorrichtung bzw. des erfindungsgemäßen Verfahrens nicht durch das jeweils im Fahrzeug vorhandene Antriebskonzept, wie Vorderrad-, Hinterrad-, Allrad- oder Mehrachsantrieb, eingeschränkt.

Die dem Fahrzeugreifen i zugeordnete Erfassungseinrichtung 10 weist beispielsgemäß einen zur Erfassung eines Reifendrucks vorgesehenen Drucksensor 10a und/oder einen zur Erfassung einer Reifentemperatur vorgesehenen Temperatursensor 10b und/o-. der einen zur Erfassung einer Raddrehzahl vorgesehenen Raddrehzahlsensor 10c auf. Die Reifendruckgröße ergibt sich dann aus den von der Erfassungseinrichtung 10 bereitgestellten Sensorsignalen als Funktion des erfassten Reifendrucks und/oder der erfassten Reifentemperatur und/oder der erfassten Raddrehzahl. Entsprechendes gilt für die Ermittlung der Reifendruckänderungsgröße, die entweder durch zeitliche Ableitung der Reifendruckgröße - im vorliegenden Fall soll es sich um eine zeitliche Ableitung 1. Ordnung handeln - oder aber unmittelbar auf Basis der von der Erfassungseinrichtung 10 bereitgestellten Sensorsignale erfolgt.

Zur Ermittlung der Reifendruckgröße bzw. der Reifendruckänderungsgröße wird der Reifendruck vorzugsweise durch Messung des im Innenraum des Fahrzeugreifens i vorliegenden Luftdrucks erfasst. Entsprechendes gilt für die Erfassung der Reifentemperatur, die entweder durch Messung der im Innenraum des Fahrzeugreifens i vorliegenden Lufttemperatur oder aber unmittelbar durch Messung der Temperatur des Fahrzeugreifens i selbst erfolgt. Die für die Anpassung des Auslösekriteriums relevante Reifentemperatur ergibt sich dabei aus der Differenz zwischen der erfassten Reifentemperatur und der zum jeweiligen Erfassungszeitpunkt vorliegenden Umgebungstemperatur.

Bei der Anpassung des Auslösekriteriums berücksichtigt die Auswerteeinheit 13 dann die ermittelte Reifendruckänderungsgröße. Ergänzend wird die ermittelte Reifendruckgröße selbst berücksichtigt. Hierbei erfolgt die Anpassung des Auslösekriteriums ausschließlich dann, wenn die Auswerteeinheit 13 feststellt, dass die ermittelte Reifendruckgröße und/oder die ermittelte Reifendruckänderungsgröße ein vorgegebenes Modifikationskriterium erfüllt, wobei die Erfüllung des Modifikationskriteriums das Vorliegen eines kritischen Reifendruckverlusts angibt. Ein kritischer Reifendruckverlust liegt dann vor, wenn sich durch Auswertung der Reifendruckgröße bzw. der Reifendruckänderungsgröße ergibt, dass der Fahrzeugreifen i einen Reifendruck aufweist, dessen momentaner Zustand bzw. dessen zeitliches Verhalten charakteristisch für das Auftreten eines Reifendefekts ist. Entsprechendes gilt für die Reifentemperatur und/ oder die Raddrehzahl bzw. für das zeitliche Verhalten dieser Größen.

Zusätzlich ist eine der Anpassung des Auslösekriteriums vorangehende Voranpassung vorgesehen. Diese erfolgt, wenn die Auswerteeinheit 13 feststellt, dass die erfasste Reifendruckgröße ein vorgegebenes Voranpassungskriterium erfüllt, wobei die Erfüllung des Voranpassungskriteriums das Vorliegen eines kritischen Reifendruckzustands angibt. Ein kritischer Reifendruckzustand liegt beispielsweise dann vor, wenn sich durch Auswertung der Reifendruckgröße ergibt, dass der Fahrzeugreifen i einen momentanen Reifendruck aufweist, der den vorgeschriebenen Reifendruck um ein gefährliches Maß unterschreitet. Die Überprüfung des Voranpassungskriteriums erfolgt vor Fahrtbeginn des Fahrzeugs, sodass ein vor Antritt der Fahrt gegebenenfalls bereits bestehender Reifendefekt bzw. ein von vornherein zu niedriger Reifendruck, beispielsweise aufgrund eines unzureichend aufgepumpten Fahrzeugreifens i, frühzeitig erkannt wird.

Da sich bei niedrigem Reifendruck im Falle einer Kurvenfahrt zum einen der Grad der Kurvenkrümmung und zum anderen die Lokalisation des betroffenen Fahrzeugreifens am Fahrzeug je nach Richtung der Kurvenkrümmung unterschiedlich auf das Fahrverhalten und damit auf das Stabilitätsverhalten des Fahrzeugs auswirkt, wird in Zusammenhang mit einer Kurvenfahrt im Falle eines Reifendruckverlusts bzw. eines von vornherein zu niedrigen Reifendrucks bei der Anpassung des Auslösekriteriums sowohl der Grad der Kurvenkrümmung als auch die Lokalisation des betroffenen Fahrzeugreifens i relativ zur Richtung der Kurvenkrümmung berücksichtigt. Der Grad bzw. die Richtung der Kurvenkrümmung wird hierbei beispielsweise auf Basis von infolge der Kurvenfahrt an den Fahrzeugrädern verursachten Raddrehzahldifferenzen ermittelt. Alternativ können andere, mit der aus der momentanen Gierbewegung des Fahrzeugs zusammenhängende Größen ausgewertet werden.

So kann der Grad bzw. die Richtung der Kurvenkrümmung von der Auswerteeinheit 13 auf Basis einer Radlenkwinkelgröße, die einen an lenkbaren Fahrzeugrädern i eingestellten Radlenkwinkel beschreibt, und/oder einer Lenkradwinkelgröße, die einen an einem Lenkrad eingestellten Lenkradwinkel beschreibt, und/oder einer Gierwinkelgröße, die den Gierwinkel des Fahrzeugs beschreibt, und/oder einer Querbeschleunigungsgröße, die eine Querbeschleunigung des Fahrzeugs beschreibt, ermittelt. Die Ermittlung der Radlenkwinkelgröße und/oder der Lenkradwinkelgröße und/ oder der Gierwinkelgröße erfolgt hierbei mittels einer mit der Auswerteeinheit 13 verbundenen, entsprechend der zu erfassenden Größe ausgebildeten Winkelsensoreinrichtung 14. Entsprechendes gilt für die Ermittlung der Querbeschleunigungsgröße, die mittels eines mit der Auswerteeinheit 13 in Verbindung stehenden Querbeschleunigungssensors 15 erfolgt. Die Richtung bzw. der Grad der Krümmung der durchfahrenen Kurve ergibt sich dann aus dem Vorzeichen bzw. dem Betrag der jeweils herangezogenen Größen.

Da das Lenkrad letztlich zur Vorgabe des Radlenkwinkels vorgesehen ist, besteht zwischen dem Lenkradwinkel und dem Radlenkwinkel im allgemeinen ein eindeutiger Zusammenhang, sodass es in aller Regel ausreicht, wenn die Auswerteeinheit 13 entweder die Lenkradwinkelgröße oder aber die Radlenkwinkelgröße zur Ermittlung des Grads und/ oder der Richtung der Kurvenkrümmung heranzieht.

Bei der Stabilisierungseinrichtung 11 soll es sich im vorliegenden Ausführungsbeispiel um ein zur Beeinflussung der Querdynamik des Fahrzeugs vorgesehenes Elektronisches Stabilitäts-Programm (ESP) handeln. Hierzu ist in der Stabilisierungseinrichtung 11 ein Regelungsverfahren implementiert, mittels dem sich das Ist-Verhalten wenigstens einer die Querdynamik des Fahrzeugs beschreibenden Querdynamikgröße im Sinne einer Erhöhung der Fahrstabilität des Fahrzeugs beeinflussen lässt. Beispielsgemäß werden insgesamt zwei Querdynamikgrößen zur Durchführung des Regelungsverfahrens herangezogen, wobei das Ist-Verhalten der Querdynamikgrößen durch deren zugehörige Istwerte wiedergegeben wird. Bei den Querdynamikgrößen handelt es sich zum einen um eine Schwimmwinkelgröße, die den Schwimmwinkel des Fahrzeugs beschreibt, oder um eine Gierratengröße, die die Gierrate des Fahrzeugs beschreibt, und zum anderen um eine Querbeschleunigungsgröße, die eine auf das Fahrzeug wirkende Querbeschleunigung beschreibt. Hierbei ergibt sich die Schwimmwinkelgröße insbesondere als Funktion der Gierratengröße und der Querbeschleunigungsgröße.

Gemäß einer ersten Ausführungsform erfasst die Stabilisierungseinrichtung 11 einen Istwert $\beta_{ist}$ für die Schwimmwinkelgröße und vergleicht diesen mit einer vorgegebenen Auslöseschwelle $\beta_{ref}$, bei deren Überschreiten das Fahrzeug zu untersteuern oder zu übersteuern droht. Ergibt der Vergleich, dass der erfasste Istwert $\beta_{ist}$ der Schwimm-winkelgröße betragsmäßig größer ist als die um eine zusätzliche Sicherheitstoleranz $\Delta\beta_{safe}$ reduzierte Auslöseschwelle $\beta_{ref}$,

$$|\beta_{ist}| > \beta_{ref} - \Delta\beta_{safe} , \qquad\qquad (1.1)$$

so nimmt die Stabilisierungseinrichtung 11 fahrzeugstabilisierende Eingriffe in die Fahrzeugaggregate 12 durch entsprechende Ansteuerung einzelner Radbremseinrichtungen 12a bis 12d und/oder des Antriebs 12f derart vor, dass der erfasste Istwert $\beta_{ist}$ der Schwimmwinkelgröße betragsmäßig auf die um die Sicherheitstoleranz $\Delta\beta_{safe}$ reduzierte Auslöseschwelle $\beta_{ref}$ begrenzt wird.

Parallel zur vorstehend beschriebenen Schwimmwinkelbegrenzung erfasst die Stabilisierungseinrichtung 11 einen Istwert $a_{ist}$ für die Querbeschleunigungsgröße und vergleicht diesen mit einer vorgegeben Auslöseschwelle $a_{ref}$, bei deren Überschreiten das Fahrzeug zu kippen droht. Ergibt der Vergleich, dass der erfasste Istwert $a_{ist}$ der Querbeschleunigungsgröße betragsmäßig größer ist als die vorgegebene Auslöseschwelle $a_{ref}$,

$$|a_{ist}| > a_{ref} \ , \qquad\qquad\qquad (1.2)$$

so nimmt die Stabilisierungseinrichtung 11 fahrzeugstabilisierende Eingriffe in die Fahrzeugaggregate 12 durch entsprechende Ansteuerung einzelner Radbremseinrichtungen 12a bis 12d und/oder des Antriebs 12f derart vor, dass der erfasste Istwert $a_{ist}$ der Querbeschleunigungsgröße betragsmäßig auf die vorgegebene Auslöseschwelle $a_{ref}$ begrenzt wird.

Gemäß einer zweiten Ausführungsform erfasst die Stabilisierungseinrichtung 11 einen Istwert $\beta_{ist}$ für die Schwimmwinkelgröße und vergleicht diesen mit einem ermittelten Sollwert $\beta_{soll}$. Ergibt der Vergleich, dass die Differenz zwischen dem ermittelten Sollwert $\beta_{soll}$ und dem erfassten Istwert $\beta_{ist}$ der Schwimmwinkelgröße betragsmäßig größer ist als eine vorgegebene Auslöseschwelle $\Delta\beta_{ref}$, bei deren Überschreiten das Fahrzeug zu untersteuern oder zu übersteuern droht,

$$|\beta_{soll} - \beta_{ist}| > \Delta\beta_{ref} \ , \qquad\qquad\qquad (1.3)$$

so nimmt die Stabilisierungseinrichtung 11 fahrzeugstabilisierende Eingriffe in die Fahrzeugaggregate 12 durch entsprechende Ansteuerung einzelner Radbremseinrichtungen 12a bis 12d und/oder des Antriebs 12f derart vor, dass der erfasste Istwert $\beta_{ist}$ auf den ermittelten Sollwert $\beta_{soll}$ der Schwimmwinkelgröße zurückgeführt wird.

Parallel zur vorstehend beschriebenen Schwimmwinkelregelung ist eine Begrenzung des Istwerts $a_{ist}$ der Querbeschleunigungsgröße entsprechend der ersten Ausführungsform, d.h. Gleichung (1.2) vorgesehen.

Gemäß einer dritten Ausführungsform erfasst die Stabilisierungseinrichtung 11 einen Istwert $\dot{\psi}_{ist}$ für die Gierratengröße und vergleicht diesen mit einem ermittelten Sollwert $\dot{\psi}_{soll}$. Ergibt der Vergleich, dass die Differenz zwischen dem ermittelten Sollwert $\dot{\psi}_{soll}$ und dem erfassten Istwert $\dot{\psi}_{ist}$ der Gierratengröße betragsmäßig größer ist als eine vorgegebene Auslöseschwelle $\Delta\dot{\psi}_{ref}$, bei deren Überschreiten das Fahrzeug zu untersteuern oder zu übersteuern droht,

$$|\dot{\psi}_{soll} - \dot{\psi}_{ist}| > \Delta\dot{\psi}_{ref} \ , \qquad\qquad\qquad (1.4)$$

so nimmt die Stabilisierungseinrichtung 11 fahrzeugstabilisierende Eingriffe in die Fahrzeugaggregate 12 durch entsprechende Ansteuerung einzelner Radbremseinrichtungen 12a bis 12d und/oder des Antriebs 12f derart vor, dass der erfasste Istwert $\dot{\psi}_{ist}$ auf den ermittelten Sollwert $\dot{\psi}_{soll}$ der Gierratengröße zurückgeführt wird.

Parallel zur vorstehend beschriebenen Gierratenregelung ist eine Begrenzung des Istwerts $a_{ist}$ der Querbeschleunigungsgröße entsprechend der ersten Ausführungsform, d.h. Gleichung (1.2) vorgesehen.

Jede der Gleichungen (1.1) bis (1.4) bildet somit ein separates Auslösekriterium zur Durchführung fahrzeugstabilisierender Eingriffe in die Fahrzeugaggregate 12, wobei für jede der drei Ausführungsformen die einzelnen Auslösekriterien permanent und gleichberechtigt von der Stabilisierungseinrichtung 11 auf ihre Erfüllung hin überprüft werden. Die Erfüllung eines bestimmten Auslösekriteriums hängt letztlich von der Fahrsituation und den äußeren Gegebenheiten ab, denen das Fahrzeug während der Fahrt unterworfen ist.

Befährt das Fahrzeug beispielsweise eine Fahrbahn mit niedrigem Reibwert, so besteht vorrangig die Gefahr eines Über- bzw. Untersteuerns des Fahrzeugs. In diesem Fall erfolgen gegebenenfalls notwendig werdende fahrzeugstabilisierende Eingriffe in die Fahrzeugaggregate 12 in erster Linie durch Auslösung der Schwimmwinkelbegrenzung gemäß Gleichung (1.1) oder aber durch Auslösung der Schwimmwinkelregelung gemäß Gleichung (1.3) bzw. der Gierratenregelung gemäß Gleichung (1.4). Weist die Fahrbahn hingegen einen hohen Reibwert auf, so besteht vorrangig die Gefahr eines Kippens. In diesem Fall erfolgen gegebenenfalls notwendig werdende fahrzeugstabilisierende Eingriffe in die Fahrzeugaggregate 12 daher in erster Linie durch Auslösung der Querbeschleunigungsbegrenzung gemäß Gleichung (1.2).

Da die Masse des Fahrzeugs erheblichen Einfluss auf das querdynamische Verhalten des Fahrzeugs hat, hängt die Erfüllung eines bestimmten Auslösekriteriums ebenfalls von der Zuladung und dem Fahrzeugtyp, beispielsweise ob es sich um einen Personenkraftwagen, einen einteiligen Lastkraftwagen oder gar einen Lastzug handelt, ab. Handelt es sich um einen Personenkraftwagen oder einen einteiligen Lastkraftwagen, so erfolgen gegebenenfalls notwendig werdende fahrzeugstabilisierende Eingriffe in die Fahrzeugaggregate 12 in erster Linie durch Auslösung der Schwimmwinkelbegrenzung gemäß Gleichung (1.1) oder aber durch Auslösung der Schwimmwinkelregelung gemäß Gleichung (1.3) bzw. der Gierratenregelung gemäß Gleichung (1.4), da dann vorrangig die Gefahr eines Untersteuerns bzw. Übersteuerns besteht. Handelt es sich hingegen um einen aus einem Zugfahrzeug und einem Anhänger bestehenden Lastzug oder um einen schwer beladenen einteiligen Lastkraftwagen, so erfolgen gegebenenfalls notwendig werdende fahrzeugstabilisierende Eingriffe in die Fahrzeugaggregate 12 in erster Linie durch Auslösung der Querbeschleunigungsbegrenzung gemäß Gleichung (1.2), da in diesem Fall vorrangig die Gefahr eines Kippens besteht.

Abweichend von der in den drei Ausführungsformen jeweils dargestellten Zweierkombination der Auslösekriterien können diese ebenfalls in beliebiger anderer Weise miteinander kombiniert sein, wobei auch lediglich ein einziges zu überprüfendes Auslösekriterium entsprechend einer einzelnen der Gleichungen (1.1) bis (1.4) vorgesehen sein kann. Hierbei ist jedes der Auslösekriterien letztlich durch seine Auslöseschwelle definiert, wobei die Auslöseschwelle wiederum bestimmend für die Auslöseempfindlichkeit der Stabilisierungseinrichtung 11 ist. Im Falle der Gleichungen (1.1) bis (1.4) ist die Auslöseempfindlichkeit dabei umso höher je kleiner der Wert der jeweiligen Auslöseschwelle gewählt wird.

Zur Ansteuerung der Radbremseinrichtungen 12a bis 12d ist eine Bremsmittelsteuerung 12e vorgesehen, bei der es sich im Falle druckbetriebener Radbremseinrichtungen 12a bis 12d um eine elektrische Druckventilsteuerung handeln kann. Des weiteren ist zur Ansteuerung des Antriebs 12f eine Antriebsmittelsteuerung 12g vorgesehen, bei der es sich im Falle eines als Verbrennungsmotor ausgebildeten Antriebs 12f typischerweise um eine zur Beeinflussung einer Drosselklappenstellung vorgesehene elektrische Stelleinrichtung handelt.

Generell wird durch geeignete Anpassung der Auslöseschwellen eine umso höhere Auslöseempfindlichkeit gewählt, je niedriger der momentane Wert des Reifendrucks ist bzw. je größer dessen zeitliche Abnahme ist. Entsprechendes gilt in Zusammenhang mit der Reifentemperatur und/oder der Raddrehzahl, wobei durch geeignete Anpassung der Auslöseschwellen eine umso höhere Auslösempfindlichkeit gewählt wird, je höher der momentane Wert bzw. je größer die zeitlich Zunahme der Reifentemperatur und/oder der Raddrehzahl ist.

Da das Stabilitätsverhalten des Fahrzeugs im Falle einer Kurvenfahrt aufgrund der dabei auftretenden Kurvenkräfte kritischer ist als im Falle einer Geradeausfahrt, erfolgt die Anpassung der Auslöseschwellen darüber hinaus derart, dass im Falle einer Kurvenfahrt eine entsprechend höhere Auslöseempfindlichkeit gewählt wird als im Falle einer Geradeausfahrt, wobei im Falle einer Kurvenfahrt eine umso höhere Auslöseempfindlichkeit gewählt wird, je größer der ermittelte Grad der Kurvenkrümmung ist. Zusätzlich wird die Lokalisation des vom Reifendruckverlust betroffenen Fahrzeugreifens i am Fahrzeug relativ zur Richtung der Kurvenkrümmung berücksichtigt. So wird beispielsweise eine höhere Auslöseempfindlichkeit gewählt, wenn sich der betroffene Fahrzeugreifen i auf der kurvenäußeren Seite des Fahrzeugs befindet als wenn sich dieser auf der kurveninneren Seite des Fahrzeugs befindet.

Der Einfachheit halber erfolgt die Anpassung der Auslöseschwellen jeweils einem ersten Schwellenwert und einem zweiten Schwellenwert entsprechend abgestuft, sodass eine besonders robuste und mit geringem Rechenaufwand verbundene Anpassung der Auslöseschwellen ermöglicht wird.

Schließlich sei noch angemerkt, dass es sich bei der Stabilisierungseinrichtung 11 anstelle eines Elektronischen Stabilitäts-Programms auch um ein Antiblockiersystem (ABS), um eine Antriebsschlupfregelung (ASR) oder um eine beliebige andere Stabilitätsregelung handeln kann.

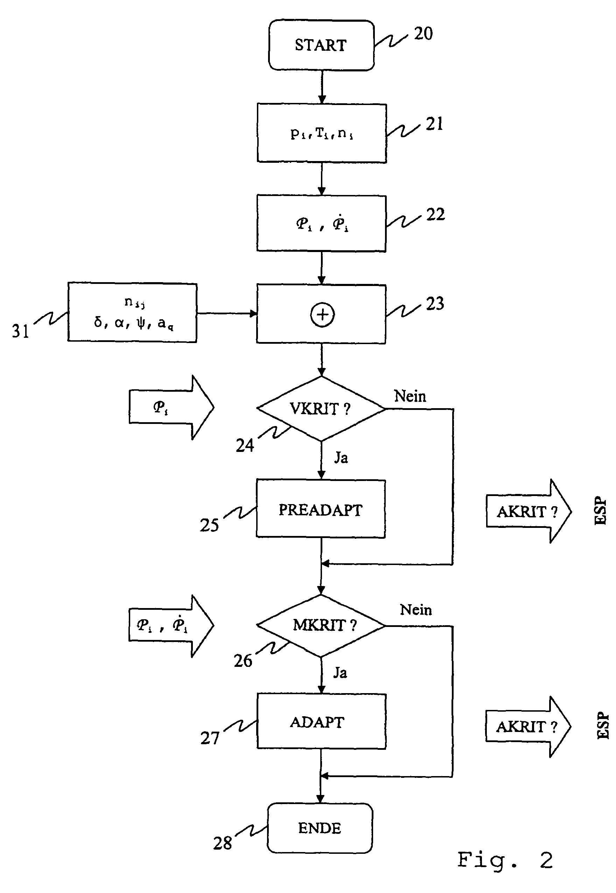

Fig. 2 zeigt ein Ausführungsbeispiel des erfindungsgemäßen Verfahrens in Form eines Flussdiagramms.

Das erfindungsgemäße Verfahren wird in einem Initialisierungsschritt 20 gestartet, woraufhin in einem ersten Hauptschritt 21 der Reifendruck $p_i$ und/oder die Reifentemperatur $T_i$ und/oder die Raddrehzahl $n_i$ des Fahrzeugreifens i erfasst wird.

Gleichzeitig werden mit der Ausführung des Initialisierungsschritts 20 die Auslöseschwellen der Stabilisierungseinrichtung 11 auf für eine Normalfahrt des Fahrzeugs vorgesehene Standardwerte gesetzt ("Reset"). Eine Normalfahrt liegt definitionsgemäß dann vor, wenn alle Fahrzeugreifen i=1...4 des Fahrzeugs intakt sind und überdies einen Reifendruck $p_i$ aufweisen, der dem vorgeschriebenen Reifendruck unter Einhaltung zulässiger Toleranzen entspricht.

Auf den ersten Hauptschritt 21 folgt ein zweiter Hauptschritt 22, in dem die Reifendruckgröße $\mathcal{P}_i$ als Funktion $f_i$ des erfassten Reifendrucks $p_i$ und/oder der erfassten Reifentemperatur $T_i$ und/oder der erfassten Raddrehzahl $n_i$ ermittelt wird,

$$\mathcal{P}_i \equiv f_i(p_i, T_i, n_i) \quad , \qquad\qquad (1.5)$$

wobei sich die Reifendruckänderungsgröße $\dot{\mathcal{P}}_i$ durch zeitliche Ableitung der Reifendruckgröße $\mathcal{P}_i$ ergibt,

$$\dot{\mathcal{P}}_i \equiv \frac{\partial f_i}{\partial p_i}\dot{p}_i + \frac{\partial f_i}{\partial T_i}\dot{T}_i + \frac{\partial f_i}{\partial n_i}\dot{n}_i \quad . \qquad\qquad (1.6)$$

Parallel hierzu wird in einem ersten Nebenschritt 31 im Falle einer Kurvenfahrt der Grad bzw. die Richtung der Kurvenkrümmung ermittelt, was entweder auf Basis der infolge der Kurvenfahrt verursachten Raddrehzahldifferenzen $\Delta n_{ij}$, i, j =1...4 , i ≠ j, oder aber alternativ durch Auswertung der Radlenkwinkelgröße $\delta$ und/oder der Lenkradwinkelgröße $\alpha$ und/oder der Gierwinkelgräße $\psi$ und/oder der Querbeschleunigungsgröße $a_q$ ermittelt.

Der im ersten Nebenschritt 31 ermittelte Grad bzw. die im ersten Nebenschritt 31 ermittelte Richtung der Kurvenkrümmung wird dann in einem dritten Hauptschritt 23 mit der für den gleichen Zeitpunkt im zweiten Hauptschritt 22 ermittelten Reifendruckgröße $\mathcal{P}_i$ bzw. Reifendruckänderungsgröße $\dot{\mathcal{P}}_i$ verknüpft. Anschließend wird in einem vierten Hauptschritt 24 überprüft, ob das vorgegebene Voranpassungskriterium VKRIT erfüllt ist. Dies ist der Fall, wenn durch Auswertung der Reifendruckgröße $\mathcal{P}_i$ festgestellt wird, dass der momentane Reifendruck $p_i$ den vorgeschrie-benen Reifendruck $p_{soll,i}$ des Fahrzeugreifens i um ein gefährliches Maß unterschreitet,

$$p_{soll,i} - p_i > \Delta p_{krit} \quad . \qquad\qquad (1.7)$$

Der Schwellenwert $\Delta p_{krit}$ beträgt beispielsweise zwischen 20 und 30 % des vorgeschriebenen Reifendrucks $p_{soll,i}$,

$$\Delta p_{krit} \approx 0,2...0,3 \cdot p_{soll,i} \quad . \qquad\qquad (1.8)$$

Wird im vierten Hauptschritt 24 festgestellt, dass das Voranpassungskriterium VKRIT erfüllt ist, so wird jede der Auslöseschwellen der Stabilisierungseinrichtung 11 in einem fünften Hauptschritt 25 entsprechend dem gegenüber ihrem Standardwert kleineren ersten Schwellenwert angepasst. Anschließend wird mit einem sechsten Hauptschritt 26 fortgefahren.

Wird im vierten Hauptschritt 24 hingegen festgestellt, dass das vorgegebene Voranpassungskriterium VKRIT nicht erfüllt ist, so wird der fünfte Hauptschritt 25 übersprungen, und es wird unmittelbar mit dem sechsten Hauptschritt 26 fortgefahren.

Im sechsten Hauptschritt 26 wird weiterhin überprüft, ob das vorgegebene Modifikationskriterium MKRIT erfüllt ist. Dies ist der Fall, wenn durch Auswertung der Reifendruckgröße $\mathcal{P}_i$ festgestellt wird, dass der momentane Wert des Reifendrucks $p_i$ und/oder der Reifentemperatur $T_i$ und/oder der Raddrehzahl $n_i$ Schwellenwerte überschreitet, die für das Auftreten eines Reifendefekts charakteristisch sind,

$$p_i > p_{ref}, \quad T_i > T_{ref}, \quad n_i > n_{ref} \quad , \qquad\qquad (1.9)$$

und/oder wenn durch Auswertung der Reifendruckänderungsgröße $\dot{\mathcal{P}}_i$ festgestellt wird, dass die zeitliche Abnahme des Reifendrucks $p_i$ bzw. die zeitliche Zunahme der Reifentemperatur $T_i$ und/oder der Raddrehzahl $n_i$ Schwellenwerte überschreitet, die ihrerseits für das Auftreten eines Reifendefekts charakteristisch sind,

$$-\dot{p}_i > \Delta p_{ref}, \quad \dot{T}_i > \Delta T_{ref}, \quad \dot{n}_i > \Delta n_{ref} \quad . \quad\quad (1.10)$$

Ergibt sich im sechsten Hauptschritt 26, das das Modifikationskriterium MKRIT erfüllt ist, so wird jede der Auslöseschwellen der Stabilisierungseinrichtung 11 in einem siebten Hauptschritt 27 im Falle einer Geradeausfahrt entsprechend dem gegenüber ihrem Standardwert kleineren ersten Schwellenwert - falls dies nicht bereits im fünften Hauptschritt 25 erfolgt ist - und im Falle einer Kurvenfahrt entsprechend dem gegenüber dem ersten Schwellenwert kleineren zweiten Schwellenwert angepasst.

Das Vorliegen einer Geradeausfahrt bzw. einer Kurvenfahrt wird hierbei auf Basis der im ersten Nebenschritt 31 ermittelten Größen erkannt.

Da sich bei niedrigem Reifendruck im Falle einer Kurvenfahrt zum einen der Grad der Kurvenkrümmung und zum anderen die Lokalisation des betroffenen Fahrzeugreifens am Fahrzeug je nach Richtung der Kurvenkrümmung unterschiedlich auf das Fahrverhalten und damit auf das Stabilitätsverhalten des Fahrzeugs auswirkt, wird gemäß einer alternativen Ausgestaltung des erfindungsgemäßen Verfahrens der zweite Schwellenwert jeweils im Falle einer Kurvenfahrt zusätzlich in Abhängigkeit des Grads der Kurvenkrümmung und/oder der Lokalisation des betroffenen Fahrzeugreifens i relativ zur Richtung der Kurvenkrümmung angepasst. So wird der zweite Schwellenwert umso niedriger eingestellt, je größer der Grad der Kurvenkrümmung ist und/oder je kritischer die Lokalisation des vom Reifendruckverlust betroffenen Fahrzeugreifens i am Fahrzeug relativ zur Richtung der Kurvenkrümmung anzusehen ist. In letzterem Fall wird der zweite Schwellenwert beispielsweise niedriger eingestellt, wenn sich der betroffene Fahrzeugreifen i auf der kurvenäußeren Seite des Fahrzeugs befindet als wenn sich dieser auf der kurveninneren Seite des Fahrzeugs befindet. Der Grad bzw. die Richtung der Kurvenkrümmung der durchfahrenen Kurve ergibt sich dabei aus den im ersten Nebenschritt 31 ermittelten Größen.

Auf den siebten Hauptschritt 27 folgt schließlich ein letzter Schlussschritt 28, in dem das Verfahren beendet wird. Wird im sechsten Hauptschritt 26 festgestellt, dass das vorgegebene Modifikationskriterium MKRIT nicht erfüllt ist, so wird der siebte Hauptschritt 27 übersprungen und das Verfahren wird unmittelbar im Schlussschritt 28 beendet, um erneut durch Ausführung des Initialisierungsschritts 20 beginnen zu können.

**Patentansprüche**

1. Vorrichtung zur Stabilisierung eines Fahrzeugs, mit einer Erfassungseinrichtung (10), die zur Ermittlung einer einen Reifendruck repräsentierenden Reifendruckgröße ($\mathit{P}_i$) vorgesehen ist, mit einer Stabilisierungseinrichtung (11), die bei Erfüllung eines vorgegebenen Auslösekriteriums (AKRIT) fahrzeugstabilisierende Eingriffe in zur Beeinflussung der Längs- und/oder Querdynamik des Fahrzeugs vorgesehene Fahrzeugaggregate (12) vornimmt, und mit einer Auswerteeinheit (13), die das vorgegebene Auslösekriterium (AKRIT) in Abhängigkeit der ermittelten Reifendruckgröße ($\mathit{P}_i$) im Sinne einer Optimierung des Stabilitätsverhaltens des Fahrzeugs anpasst,

   **dadurch gekennzeichnet,**

   **dass** die Auswerteeinheit (13) eine Reifendruckänderungsgröße ($\dot{\mathit{P}}_i$) ermittelt, die das zeitliche Verhalten der ermittelten Reifendruckgröße ($\mathit{P}_i$) beschreibt, wobei die Anpassung des Auslösekriteriums (AKRIT) unter Berücksichtigung der ermittelten Reifendruckänderungsgröße ($\dot{\mathit{P}}_i$) erfolgt.

2. Vorrichtung nach Anspruch 1,
   **dadurch gekennzeichnet,**
   **dass** die Anpassung des Auslösekriteriums (AKRIT) unter gleichzeitiger Berücksichtung sowohl der ermittelten Reifendruckänderungsgröße ($\dot{\mathit{P}}_i$) als auch der ermittelten Reifendruckgröße ($\mathit{P}_i$) selbst erfolgt.

3. Vorrichtung nach Anspruch 1,
   **dadurch gekennzeichnet,**
   **dass** die ermittelte Reifendruckgröße ($\mathit{P}_i$) eine Funktion eines erfassten Reifendrucks ($p_i$) und/oder einer erfassten Reifentemperatur ($T_i$) und/oder einer erfassten Raddrehzahl ($n_i$) ist.

**4.** Vorrichtung nach Anspruch 1,

**dadurch gekennzeichnet,**

**dass** die Anpassung des Auslösekriteriums (AKRIT) dann erfolgt, wenn die Auswerteeinheit (13) feststellt, dass die ermittelte Reifendruckgröße ($\mathcal{P_i}$) und/oder die ermittelte Reifendruckänderungsgröße ($\dot{\mathcal{P_i}}$) ein vorgegebenes Modifikationskriterium (MKRIT) erfüllt, wobei die Erfüllung des Modifikationskriteriums (MKRIT) das Vorliegen eines kritischen Reifendruckverlusts angibt.

**5.** Vorrichtung nach Anspruch 1,

**dadurch gekennzeichnet,**

**dass** eine der Anpassung des Auslösekriteriums (AKRIT) vorangehende Voranpassung erfolgt, wenn die Auswerteeinheit (13) feststellt, dass die erfasste Reifendruckgröße ($\mathcal{P_i}$) ein vorgegebenes Voranpassungskriterium (VKRIT) erfüllt, wobei die Erfüllung des Voranpassungskriterium (VKRIT) das Vorliegen eines kritischen Reifendruckzustands angibt.

**6.** Vorrichtung nach Anspruch 1,
**dadurch gekennzeichnet,**
**dass** die Anpassung des Auslösekriteriums (AKRIT) unter Berücksichtigung der momentanen Gierbewegung des Fahrzeugs erfolgt.

**7.** Vorrichtung nach Anspruch 1,
**dadurch gekennzeichnet,**
**dass** im Falle eines Reifendruckverlusts die Anpassung des Auslösekriteriums (AKRIT) unter Berücksichtigung der Lokalisation des betroffenen Fahrzeugreifens am Fahrzeug relativ zur Richtung der Kurvenkrümmung und/oder des Grads der Kurvenkrümmung erfolgt.

**8.** Vorrichtung nach Anspruch 7,
**dadurch gekennzeichnet,**
**dass** die Auswerteeinheit (13) den Grad der Kurvenkrümmung und/oder die Richtung der Kurvenkrümmung auf Basis von Raddrehzahldifferenzen ($n_{ij}$), und/oder einer Radlenkwinkelgröße ($\delta$), die einen an lenkbaren Fahrzeugrädern eingestellten Radlenkwinkel beschreibt, und/oder einer Lenkradwinkelgröße ($\alpha$), die einen an einem Lenkrad eingestellten Lenkradwinkel beschreibt, und/oder einer Gierwinkelgröße ($\psi$), die einen Gierwinkel des Fahrzeugs beschreibt, und/oder einer Querbeschleunigungsgröße ($a_q$), die die Querbeschleunigung des Fahrzeugs beschreibt, ermittelt.

**9.** Vorrichtung nach Anspruch 1,
**dadurch gekennzeichnet,**
**dass** es sich bei der Stabilisierungseinrichtung (11) um ein Elektronisches Stabilitäts-Programm oder ein Antiblokkiersystem oder eine Antriebsschlupfregelung handelt.

**10.** Vorrichtung nach Anspruch 1,
**dadurch gekennzeichnet,**
**dass** das Auslösekriterium (AKRIT) durch eine die Auslöseempfindlichkeit der Stabilisierungseinrichtung (11) bestimmende Auslöseschwelle definiert ist, wobei die Anpassung des Auslösekriteriums (AKRIT) durch Anpassung der Auslöseschwelle erfolgt.

**11.** Vorrichtung nach Anspruch 10,
**dadurch gekennzeichnet,**
**dass** die Anpassung der Auslöseschwelle bei Auftreten eines Reifendruckverlusts im Sinne einer Erhöhung der Auslöseempfindlichkeit erfolgt.

**12.** Vorrichtung nach Anspruch 11,
**dadurch gekennzeichnet,**
**dass** die Anpassung der Auslöseschwelle derart erfolgt, dass im Falle einer Kurvenfahrt die Auslöseempfindlichkeit höher ist als im Falle einer Geradeausfahrt.

**13.** Vorrichtung nach Anspruch 10,

**dadurch gekennzeichnet,**

**dass** die Anpassung der Auslöseschwelle einem ersten Schwellenwert oder einem zweiten Schwellenwert entsprechend abgestuft erfolgt, wobei der erste Schwellenwert einer geringeren Auslöseempfindlichkeit entspricht als der zweite Schwellenwert.

**14.** Verfahren zur Stabilisierung eines Fahrzeugs, bei der eine einen Reifendruck repräsentierende Reifendruckgröße ($P_i$) ermittelt wird, und bei dem bei Erfüllung eines vorgegebenen Auslösekriteriums (AKRIT) fahrzeugstabilisierende Eingriffe in die Längs- und/oder Querdynamik des Fahrzeugs vorgenommen werden, wobei das vorgegebene Auslösekriterium (AKRIT) in Abhängigkeit der ermittelten Reifendruckgröße ($P_i$) im Sinne einer Optimierung des Stabilitätsverhaltens des Fahrzeugs angepasst wird,

**dadurch gekennzeichnet,**

**dass** eine Reifendruckänderungsgröße ($\dot{P}_i$) ermittelt wird, die das zeitliche Verhalten der ermittelten Reifendruckgröße ($P_i$) beschreibt, wobei die Anpassung des Auslösekriteriums (AKRIT) unter Berücksichtigung der ermittelten Reifendruckänderungsgröße ($\dot{P}_i$) erfolgt.

EP 1 634 760 A1

i; i = 1...4

14 15

10
10a
10b
10c

13 11

14

12
12a 12b

12e

12g

12c 12d

12f

Fig. 1

Fig. 2

**Europäisches Patentamt**

# EUROPÄISCHER RECHERCHENBERICHT

Nummer der Anmeldung

EP 05 01 8746

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 2002/019685 A1 (RIES-MUELLER KLAUS) 14. Februar 2002 (2002-02-14) * Absätze [0010], [0016], [0020] * ----- | 1,14 | B60K28/14 B60K41/20 B60T8/1755 |
| A | DE 100 15 267 A1 (SIEMENS AG) 25. Oktober 2001 (2001-10-25) * Absätze [0009] - [0012], [0024] - [0028]; Anspruch 1 * ----- | 1,14 | |
| A | DE 102 34 593 A1 (ROBERT BOSCH GMBH) 19. Februar 2004 (2004-02-19) * Absätze [0025] - [0029] * ----- | 1,14 | |

**RECHERCHIERTE SACHGEBIETE (Int.Cl.7)**

B60K
B60T

Der vorliegende Recherchenbericht wurde für alle Patentansprüche erstellt

| Recherchenort | Abschlußdatum der Recherche | Prüfer |
|---|---|---|
| München | 2. November 2005 | Plenk, R |

**ANHANG ZUM EUROPÄISCHEN RECHERCHENBERICHT**
**ÜBER DIE EUROPÄISCHE PATENTANMELDUNG NR.**

EP 05 01 8746

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2005

| Im Recherchenbericht angeführtes Patentdokument | Datum der Veröffentlichung | Mitglied(er) der Patentfamilie | Datum der Veröffentlichung |
|---|---|---|---|
| US 2002019685 A1 | 14-02-2002 | DE 10029282 A1<br>FR 2810397 A1<br>JP 2002054982 A | 20-12-2001<br>21-12-2001<br>20-02-2002 |
| DE 10015267 A1 | 25-10-2001 | KEINE | |
| DE 10234593 A1 | 19-02-2004 | WO 2004016484 A1 | 26-02-2004 |

EPO FORM P0461

Für nähere Einzelheiten zu diesem Anhang : siehe Amtsblatt des Europäischen Patentamts, Nr.12/82